(19) Europäisches Patentamt European Patent Office Office européen des brevets

(11) **EP 4 708 900 A1**

(12) **EUROPEAN PATENT APPLICATION**

(43) Date of publication:
**11.03.2026 Bulletin 2026/11**

(21) Application number: **25191482.6**

(22) Date of filing: **24.07.2025**

(51) International Patent Classification (IPC):
*H04Q 11/00* (2006.01)   *H04L 41/16* (2022.01)

(52) Cooperative Patent Classification (CPC):
**H04Q 11/0005; H04L 41/0806; H04L 41/16;
H04Q 11/0003**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.07.2024  US 202418788994**

(71) Applicant: **Nokia Solutions and Networks Oy
02610 Espoo (FI)**

(72) Inventors:
• **KODIALAM, Muralidharan
  Austin, TX (US)**
• **LAKSHMAN, TV
  Morganville, NJ (US)**

(74) Representative: **Nokia EPO representatives
Nokia Technologies Oy
Karakaari 7
02610 Espoo (FI)**

(54) **MACHINE-LEARNING BASED APPROACH FOR ROBUST CONFIGURATION OF OPTICALLY INTERCONNECTED DATA CENTERS**

(57)    In some embodiments, there may be provided a systems, methods, and articles of manufacture that learn, by the machine learning model and based at least on the at least one traffic matrix, a first output indicative of at least one deflection routing parameter and a second output indicative of at least one optical switch configuration, wherein the learning jointly determines the first output indicative of at least one deflection routing parameter and a second output indicative of at least one optical switch configuration; provide the first output indicative of the at least one deflection routing parameter to a network management system to configure at least one aggregation node comprised in a directly interconnected data center; and provide the second output indicative of the at least one optical switch configuration to the network management system to configure at least one optical switch comprised in the directly interconnected data center.

EP 4 708 900 A1

## Description

### FIELD

The subject matter described herein relates to machine learning for configuring devices at data centers.

### BACKGROUND

Machine learning (ML) models may learn via training. The ML model may take a variety of forms, such as an artificial neural network (or neural network, for short), decision trees, and/or the like. The training of the ML model may be supervised (with labeled training data), semi-supervised, or unsupervised. When trained, the ML model may be used to perform an inference task.

### SUMMARY

In some embodiments, there may be provided receiving, as an input to a machine learning model, at least one traffic matrix; learning, by the machine learning model and based at least on the at least one traffic matrix, a first output indicative of at least one deflection routing parameter and a second output indicative of at least one optical switch configuration, wherein the learning jointly determines the first output indicative of at least one deflection routing parameter and a second output indicative of at least one optical switch configuration; providing, by the machine learning model, the first output indicative of the at least one deflection routing parameter to a network management system to configure at least one aggregation node comprised in a directly interconnected data center; and providing, by the machine learning model, the second output indicative of the at least one optical switch configuration to the network management system to configure at least one optical switch comprised in the directly interconnected data center.

In some variations, one or more of the features disclosed herein including the following features can optionally be included in any feasible combination. The machine learning model may include a neural network, and wherein the learning is based at least on backpropagation to learn the first output indicative of the at least one deflection routing parameter and the second output indicative of the at least one optical switch configuration. The at least one traffic matrix may indicate at least an amount of traffic flow between a first aggregation node and a second aggregation node. The at least one aggregation node may include a first aggregation node, a second aggregation node, and an intermediate aggregation node, wherein the first aggregation node, the second aggregation node, and the intermediate aggregation node are optically coupled via the at least one optical switch, wherein the at least one deflection routing parameter indicates a fractional amount of traffic that is to be carried between the first aggregation node and the second aggregation node via the intermediate aggregation node. The at least one optical switch configuration may provide at least a first configuration of a first MEMS-based mirror comprised in a first optical switch, wherein the first MEMS-based mirror provides an optical path between an a first optical line and a second optical line that are incident on the first optical switch, wherein the first optical line is further coupled to a first aggregation node, and wherein the second optical line is further coupled to a second aggregation node. Moreover, one or more values of the at least one optical switch configuration may be rounded to provide a binary value that indicate whether an optical switch provides or does not provide an optical path between an incoming optical line and an outgoing optical line. Moreover, the machine learning model may learn, based at least one the at least one traffic matrix and the at least one optical switch configuration which is fixed during the learning, an updated first output indicative of at least one updated deflection routing parameter; and provide the updated first output to the network management system to configure the at least one aggregation node comprised in the directly interconnected data center. The learning of the first output and the second output may minimize an objective function. The machine learning model may include a neural network that includes a first layer to receive inputs including the input, at least one intermediate layer, and an output layer.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

### DESCRIPTION OF DRAWINGS

In the drawings,

FIG. 1A depicts an example of a network management system including a machine learning (ML) model, in accordance with some embodiments;
FIG. 1B depicts an example system architecture for a directly interconnected data center (DIDC) architecture, in accordance with some embodiments;

FIG. 1C depicts an optical switch of a direct interconnect layer of a directly interconnected data center, in accordance with some example embodiments;

FIGs. 1D and 1E depict deflection routing from a first aggregation block to a second aggregation block *j* through an intermediate aggregation block *k,* in accordance with some embodiments;

FIGs. 2A-2B depict examples of a machine learning (ML) models, in accordance with some embodiments;

FIG. 3 depicts an example of a rounding algorithm, in accordance with some embodiments;

FIG. 4 depicts an example of a process for determining deflection routing parameters and optical switch configurations, in accordance with some embodiments;

FIG. 5 depicts another example of a ML model, in accordance with some embodiments;

FIG. 6 depicts an example of a network node, in accordance with some embodiments; and

FIG. 7 depicts an example of a computing system, in accordance with some embodiments.

Like labels are used to refer to same or similar items in the drawings.

## DETAILED DESCRIPTION

Data centers play a pivotal role in the modern digital landscape and serve as a backbone for the storage, processing, and/or distribution of vast amounts of data. These facilities may be considered the so-called "lifeblood" of the internet, cloud computing, and many other critical applications that rely on the near-constant availability of computing resources. Traditional data center architectures have evolved over the years to meet the growing demands for performance, scalability, and efficiency. In a typical data center architecture, servers are organized within racks and cabinets and interconnected through a complex web of switches and routers. This hierarchical network is designed to manage and route data traffic efficiently across many servers, for example. These data centers often employ traditional Ethernet or Fiber Channel technologies to enable communication between servers. While such conventional data center architectures are useful, they face several challenges, when dealing with for example the increasing demands of contemporary data-intensive applications. The limitations of these architectures include issues like latency, scalability, and/or the complexity of network management. In response to these challenges, a more recent architecture referred to as a "Directly Interconnected Data Center" architecture" (or DIDC, for short) has emerged to address some of the shortcomings of the noted traditional data center.

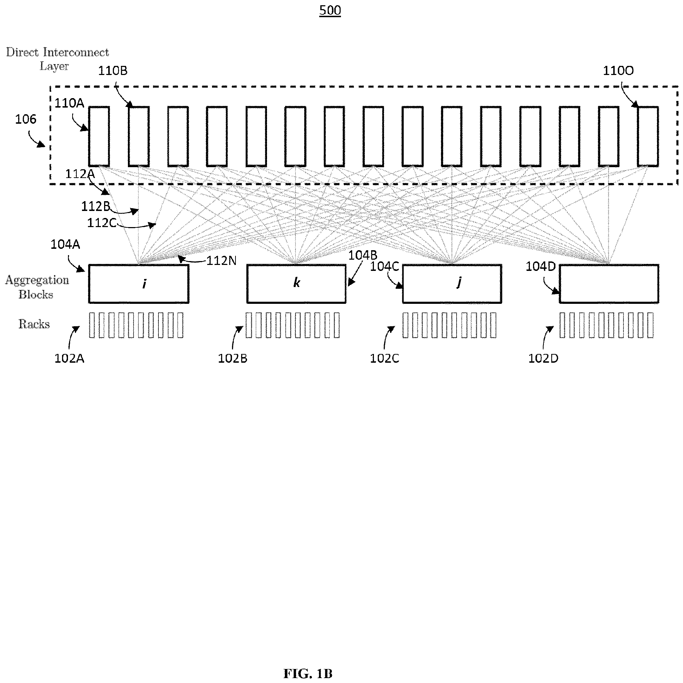

In the case of the DIDC, the DIDC aims to revolutionize the way data centers are structured and how data flows within them. FIG. 1B depicts an example system architecture for the DIDC 500, in accordance with some embodiments. There may be a plurality or racks 102A-D. These racks 102A-D may each comprise at least one device, such as a server, a computer, a storage device, a single slot card (e.g., providing at least one processor and at least one memory configured to provide one or more virtual machines or hosting storage), and/or other types of devices.

In the example of FIG. 1B, the racks 102A-D are interconnected at a first level at nodes, such as aggregation blocks 104A-D (also referred to a "aggregation nodes"). These aggregation blocks may each comprise a switch, a router, a backplane, and/or other type of node that aggregates traffic from the coupled racks 102A-D, and the aggregation blocks may provide a link to the direct interconnect layer 106.

In the example of FIG. 1B, the direct interconnect layer 106 comprises optical switches 110A-N. An example of the optical switch is a micro-electromechanical systems (MEMs) based optical interconnect switch. For example, the optical switch may comprise MEMS devices, such as MEMS-based mirrors, that are switched to provide an optical path between a switch input and switch output. In the example of FIG. 1B, the aggregation blocks, such as aggregation block 104A, are coupled to the optical switches 110A-N via interconnects, such as optical lines or optical cables 112A-N. The other aggregation blocks 104B-D may be similarly connected to the optical switches as shown in the example of FIG. 1B.

Although FIG. 1B shows a fully interconnected configuration between the aggregation blocks 104A and the optical switches 110A-N, the interconnections provided by optical lines 112A-N may not be fully interconnected (e.g., partial). Unlike a traditional data center architecture where data often passes through multiple layers of switches and routers before reaching its destination, the DIDC approach may be considered "flatter" and thus can promote direct, low-latency connections between the devices at the racks. Moreover, the DIDC architecture may provide numerous advantages. For example, the DIDC may, in some implementations, fully harness the bandwidth of optical fiber cables (which can significantly reduce the cost per bit of transmission and can enhance overall network throughput). And every server (e.g., at a rack) within the DIDC can have a direct optical connection to all other servers (e.g., at a rack), so the direct optical connection can ensure highly efficient and low-latency communication. Furthermore, the DIDC architecture can minimize the number of switching hops required for data transmission, which can reduce latency and power consumption. Additionally, the DIDC architecture can provide a high degree of scalability. To accommodate increased demand for example, a DIDC administrator can simply add more racks of servers and interconnect the added racks of servers with existing ones. And, the DIDC can reduce the complexity of network management by utilizing a single, centralized switch at for example 106 for each group of racks providing servers, which can streamline administrative tasks and enhances overall efficiency. Redundancy and fault tolerance can also be provided in the DIDC architecture by employing multiple parallel links between switches and creating redundant paths between racks/servers.

Although the DIDC provides numerous advantages over past approaches, there are challenges with respect to (1) determining the configuration of the optical switches and (2) determining the routing path from a source aggregation block and a destination aggregation block. In some embodiments, there is provided a machine learning (ML) based way to jointly determine the configuration of the optical switches and (2) determine the routing path from a source aggregation block to a destination aggregation block.

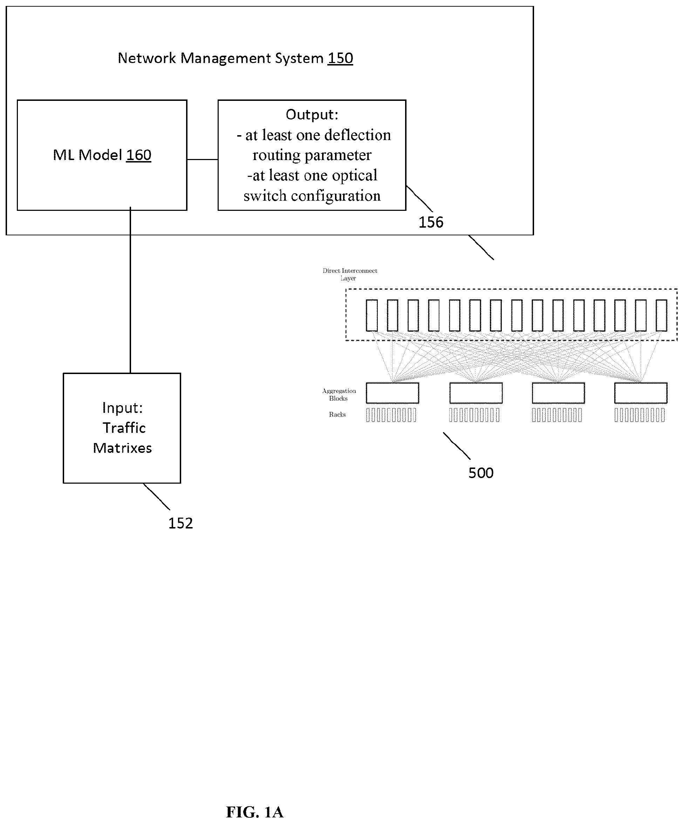

FIG. 1A depicts an example of a network management system 150 including a machine learning model 160, such as a neural network, that jointly learns (given, for example, one or more input traffic matrixes) the configuration of the optical switches and the routing paths (e.g., deflection parameters from the aggregations blocks) from a source aggregation block to a destination aggregation block. And the learned configuration of the optical switches and the routing paths may be used, by the network management system 150, to configure and thus manage a network, such as Directly Interconnected Data Center (DIDC) system 500. For example, given at least one traffic matrix as an input 152, the ML model 160 learns a first output that is indicative of at least one deflection routing parameter and a second output indicative of at least one optical switch configuration. The ML model may provide the outputs 156 to the network management system 150 to configure a network, such as the DIDC system 500.

Referring again to FIG. 1B, the traffic in a data center comprising a DIDC may be specified in the form of a traffic matrix $d$, wherein $d_{ij}$ is the traffic between nodes $i$ and $j$. Given the traffic matrix (or traffic matrixes), the configuration of the data center remains a challenge. Specifically, the configuration problem is to configure (e.g., design) the interconnects in each optical switch 110A-N (e.g., the mirrors to provide a path from the switch input to the switch output, while also configuring routing parameters that define a routing scheme or paths between the aggregation blocks, such as block 104A, 104B, etc.

For example, there may be multiple traffic matrices d(t), wherein $d_{ij}(t)$ is the traffic between aggregation nodes $i$ 104A and aggregation node $j$ 104B at time t in the traffic matrix (wherein $1 \leq t \leq T$). In the traffic oblivious problem formulation, the traffic pattern is one of these T given traffic matrices, but we want the interconnect pattern of the optical switches and the routing to be oblivious to the traffic matrices. In the traffic dependent routing problem, the routing can depend on the traffic pattern, but the optical switch configuration is still independent of the traffic pattern since the optical switches cannot be reconfigured in real time.

*CONFIGURING THE OPTICAL SWITCHES*

To configure the optical switches 110A, 110B, and so forth through 1100, each aggregation block 104A-D may be connected to all of the optical switches (although as noted the connections may not be full but partial). As such, each of the optical switches have n lines (e.g., 112A-N which may be assumed to be even) incident on a corresponding optical switch. And, the optical switches interconnects pairs of these incident lines. These lines (which represent an optical path or optical line) are interconnected using for example $n/2$ MEMS mirrors in the optical switch, so each of these mirrors can connect two aggregation boxes, such as 104A and 104B. These optical connections may be bi-directional (as the mirror can support bi-directional communications). The MEMs mirrors can be configured to provide an interconnect configuration or pattern. The interconnect pattern of the optical switches may be realized so as long as each aggregation box 104A-D is connected to another unique aggregation box. For a given optical switch $p$, such as optical switch 110A, $y_{ij}^{p}$ indicates whether switch p interconnects aggregation node $i$ and aggregation node $j$ as follows:

$$y_{ij}^{p} = \begin{cases} 1 & \text{if switch } p \text{ interconnects } i \text{ and } j \\ 0 & \text{otherwise} \end{cases}.$$

To ensure that the interconnect is valid, the interconnect between nodes $i$ and j should satisfy a permutation matrix and symmetry constraints as follows:

$$\sum_{i} y_{ij}^{p} = 1 \quad \forall j, p$$

$$\sum_j y_{ij}^p \;=\; 1 \quad \forall i, p$$

$$y_{ij}^p \;=\; y_{ji}^p \quad \forall i, j, p$$

$$y_{ij}^p \;\in\; \{0, 1\} \quad \forall i, j, p$$

.

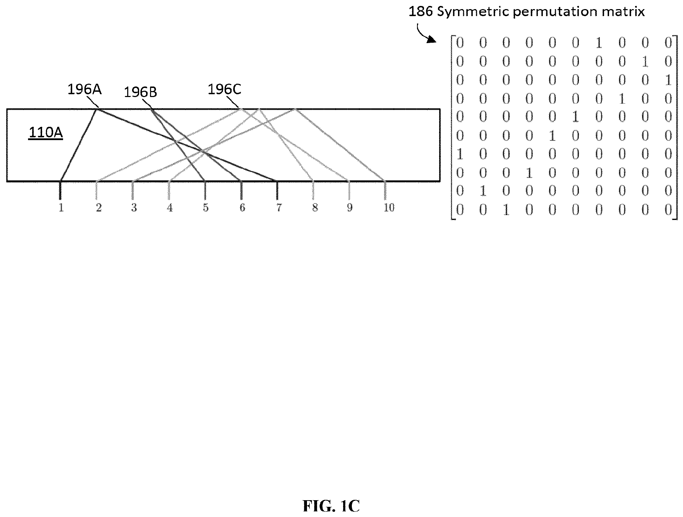

FIG. 1C depicts an optical switch (e.g., optical switch 110A) of the direct interconnect layer 106. In this example, the optical switch 110A comprises a 10 by 10 MEMs switch that interconnects 10 aggregation blocks (labeled "1" through "10"), although other sizes of optical switches may be used as well. This MEMs switch has an interconnect pattern or optical switch configuration. For example, a first MEMS mirror 196A connects aggregation block "1" and aggregation block "7", a second MEMS mirror 196B connects aggregation block "2" and aggregation block "9", a third MEMS mirror 196C connects aggregation block "3" and aggregation block "10", and so forth. And, the connection is, as noted, bi-directional. For example, the first MEMS mirror (which connects aggregation block "1" and "7") supports traffic from aggregation block 1 to aggregation block 7 and support traffic from aggregation block 7 to aggregation block 1. The interconnect pattern of the MEMs mirrors is symmetric, which in this example is a 10 by 10 permutation matrix as shown at 186.

*ROUTING BETWEEN BLOCKS*

To route between aggregation blocks such as between aggregation block 104A and aggregation block 104C, the traffic matrix entry $d_{ij}(t)$ specifies the amount of traffic between aggregation block $i$ 104A and aggregation block $j$ 104C in a given traffic matrix $t$. The traffic can be assumed to be either routed from $i$ to $j$ through at most two optical switches. In other words, the traffic from $i$ to $j$ (e.g., aggregation box $i$ 104A and aggregation box $j$ 104C) is routed directly from $i$ to $j$ through an optical switch (which is at the direct interconnect layer 106), wherein aggregation block $i$ 104A and aggregation block $j$ 104C are interconnected. Otherwise, the traffic from $i$ to $j$ is routed through an intermediate aggregation block $k$, such as aggregation block $i$ 104B. In this example, the traffic goes from aggregation block $i$ to aggregation block k through one optical switch that interconnects $i$ and $k$ and from $k$ to $j$ through a second switch that interconnects $k$ and $j$. This type of routing through an intermediate node $k$ is referred to as deflection routing (e.g., where the traffic is deflected through an intermediate node).

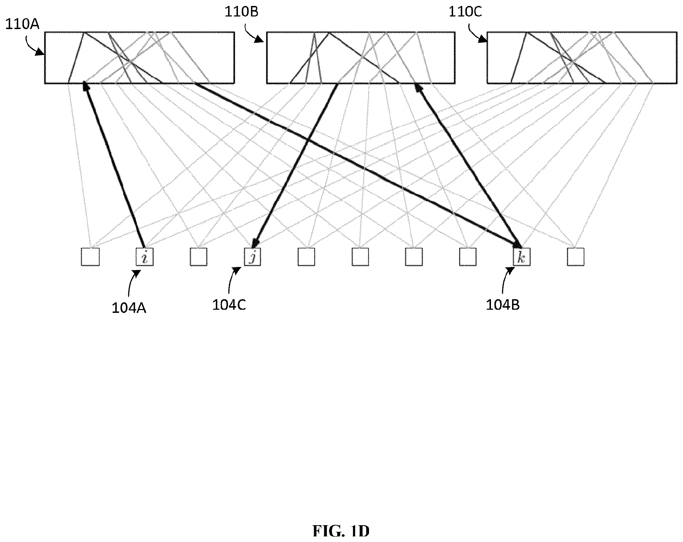

FIG. 1D depicts an example of deflection routing from the aggregation block $i$ 104A to aggregation block $j$ 104C through aggregation block $k$ 104B. This deflection routing scheme can be extended to multiple deflections but each deflection results in increased latency. Since minimizing latency is a consideration when routing in the DIDC, the routing can be restricted to two hop deflections (although other hop quantities may be used as well).

In an implementation using a two-hop deflection, let $x_{ij}^k$ denote the fraction of traffic from aggregation block $i$ 104A to aggregation block $j$ 104C that is routed through an intermediate aggregation block $k$ 104B, where $\sum_k x_{ij}^k = 1$ for all $i,j$. For a fixed aggregation block $i$, the $x_{ij}^k$ is a two-dimensional stochastic matrix where the sum of each row is one. To compute traffic flows between aggregation blocks where there is a flow from aggregation block $i$ to aggregation block j through intermediate aggregation block $k$, the traffic is generated between aggregation blocks $i$ to $k$ and $k$ to $j$, so for a given set of $x_{ij}^k$, the total amount of flow $\phi_{ij}(t)$ between aggregation blocks $i$ and j for traffic matrix $t$ is determined in accordance with the following:

$$\phi_{ij}(t) = \sum_k x_{kj}^i d_{kj}(t) + \sum_k x_{ik}^j d_{ik}(t).$$

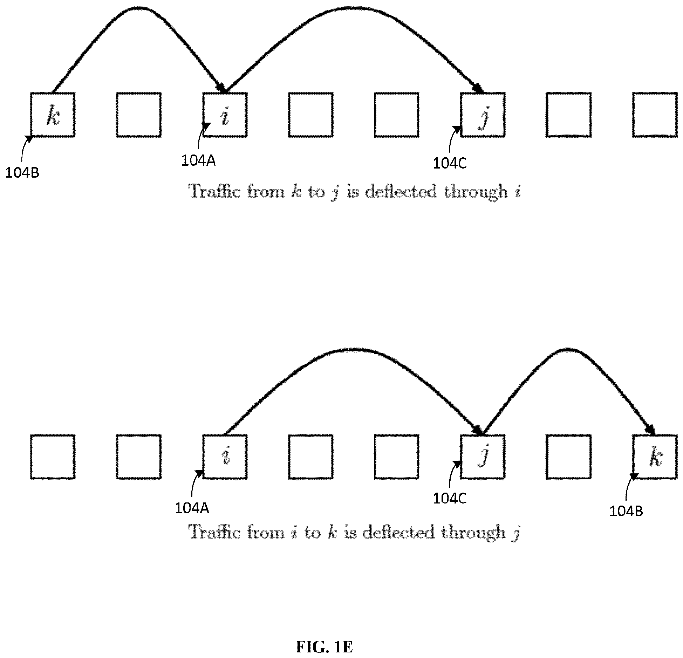

The traffic flows among aggregation block $i$ to aggregation block $j$ through intermediate aggregation block $k$ are depicted graphically at FIG. 1E, which shows the shows the two cases where there is a flow between blocks $i$ and $j$. Similarly, the traffic flow from aggregation block $j$ to aggregation block $i$ for traffic matrix $t$ is as follows:

$$\phi_{ji}(t) = \sum_k x_{ki}^j d_{ki}(t) + \sum_k x_{jk}^i d_{jk}(t).$$

Capacity is provided between aggregation blocks by providing interconnections (e.g., 112A, 112B, etc.) between the aggregation blocks and the optical switches. As the amount of capacity installed is symmetric for example, the total amount of traffic flow $f_{ij}$ between aggregation block $i$ and aggregation block $j$ is as follows:

$$f_{ij} = \max_t \{\phi_{ij}(t), \phi_{ji}(t)\}.$$

*OVERALL TRAFFIC OBLIVIOUS OPTIMIZATION PROBLEM*

To take into account some if not all of the given traffic matrices, the deflection routing and interconnect capacity are solved jointly. To that end, the optical switch interconnects and the deflection routing are configured (or designed) to work for some, if not all, $T$ traffic matrices, and both the optical switch interconnects and the deflection routing cannot be changed depending on the traffic pattern(s). This can be formulated as an optimization problem (e.g., an integer linear programming problem) that can be solved by the ML model 160 (which can be implemented using a neural network, for example) with an objective function as follows:

$$\min \sum_i \sum_j \left[ f_{ij} - \sum_p y_{ij}^p \right]^+$$

,

and constraints as follows:

$$\sum_k x_{kj}^i d_{kj}(t) + \sum_k x_{ik}^j d_{ik}(t) \leq f_{ij} \qquad \forall i,j,t$$

$$\sum_k x_{ki}^j d_{ki}(t) + \sum_k x_{jk}^i d_{jk}(t) \leq f_{ij} \qquad \forall i,j,t$$

$$\sum_k x_{ij}^k = 1 \qquad \forall i,j$$

$$\sum_i y_{ij}^p = 1 \qquad \forall j,p$$

$$\sum_j y_{ij}^p = 1 \qquad \forall i,p$$

$$y_{ij}^p = y_{ji}^p \qquad \forall i,j,p$$

$$y_{ij}^p \in \{0,1\} \quad \forall i,j,p$$

$$x_{ij}^k \geq 0 \qquad \forall i,j,k$$

wherein the function $[x]^+$ represents the maximum of 0, $x$. Moreover, the first three constraints are the deflection routing constraints (which involve *x*), and the subsequent constraints (which involve $y_{ij}^p$ ) are the optical switch configuration constraints that ensure that each switch configuration is a symmetric permutation matrix (e.g., the $y_{ij}^p$ are binary variables).

To provide an integral solution, the integrality on the $y_{ij}^p$ variables is provided by the following constraint:

$$\sum_i \sum_p \left[ y_{ij}^p \right]^2 = nm$$

,

which is added to the linear programming relaxation of the joint configuration and routing problem. For all *i* and *p*, the $\sum_j y_{ij}^p = 1$ along with the non-negativity of $y_{ij}^p$ imply that precisely *nm* of the $y_{ij}^p$ variables are set to one (where there are *m* switches, each of which has *n* lines). In addition, the constraints

$$\sum_i y_{ij}^p = 1 \quad \forall j, p$$

$$\sum_j y_{ij}^p = 1 \quad \forall i, p$$

imply that the only feasible solutions to the equation $\sum_i \sum_p \left[ y_{ij}^p \right]^2 = nm$ are symmetric permutations at each switch *p*. The integrality enforcement constraint may be relaxed with the inequality $\sum_i \sum_p \left[ y_{ij}^p \right]^2 \geq nm$ , and a LaGrange multiplier of $\lambda$ may be included in the objective function to relax the integrality constraints on $y_{ij}^p$ to get the following optimization function:

$$\min \quad \sum_i \sum_j \left[ f_{ij} - \sum_p y_{ij}^p \right]^+ + \lambda \left[ nm - \sum_i \sum_p \left[ y_{ij}^p \right]^2 \right]^+ \quad \textbf{A.}$$

$$\sum_k x_{kj}^i d_{kj}(t) + \sum_k x_{ik}^j d_{ik}(t) \leq f_{ij} \quad \forall i, j, t \quad \textbf{B.}$$

$$\sum_k x_{ki}^j d_{ki}(t) + \sum_k x_{jk}^i d_{jk}(t) \leq f_{ij} \quad \forall i, j, t \quad \textbf{C.}$$

$$\sum_k x_{ij}^k = 1 \quad \forall i, j \quad \textbf{D.}$$

$$\sum_i y_{ij}^p = 1 \quad \forall j, p \quad \textbf{E.}$$

$$\sum_j y_{ij}^p \qquad\qquad = 1 \qquad \forall i, p \quad \text{F.}$$

$$y_{ij}^p \qquad\qquad = y_{ji}^p \quad \forall i, j, p \quad \text{G.}$$

$$y_{ij}^p \qquad\qquad \geq 0 \quad \forall i, j, p \quad \text{H.}$$

$$x_{ij}^k \qquad\qquad \geq 0 \quad \forall i, j, k \quad \text{I.}$$

wherein A. is the objective function that comprises of two parts (the first part ensures that the routed traffic is less than the installed capacity and the second part ensures that the installed capacity is integral; the left hand side of B. represents the traffic that is routed from node $i$ to node $j$ and the constraint ensures that the routed traffic is less than the installed capacity; C. is the traffic from node $j$ to node $i$ and since the capacity is symmetric, this capacity quantity has to be less than the installed node $i$ to node $j$ capacity; D. ensures that all traffic is deflected through some node; E. and F. ensure that each optical port is connected to exactly one other optical port; G. ensures that the optical switch connection is symmetric; and H. and I. ensure that the variables are nonnegative.

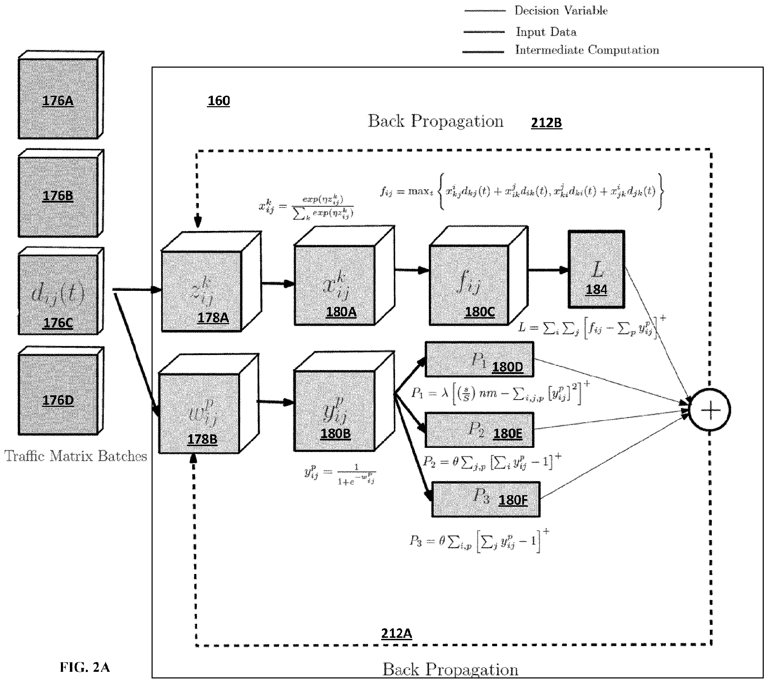

FIG. 2A depicts an example of a machine learning model 160, in accordance with some example embodiments. For example, the machine learning model 160 may comprise a deep learning neural network, which may be configured using for example, PyTorch or other neural network or machine learning model building tool. In the example of FIG. 2A, the machine learning model 160 uses back propagation 212A-B and gradient descent to solve the objective function given the constraints.

For example, the machine learning model 160 receives, as an input, one or more traffic matrixes 176A-C. And, the machine learning model 160 provides a first output comprising the deflection routing parameters 178A and a second output 178B comprising the optical switch configurations. During learning, intermediate nodes 180A-F are determined, such that the machine learning model converges (via backpropagation 212A-B) to jointly provide the first output 178A comprising the deflection routing parameters and a second output 178B comprising the optical switch configurations.

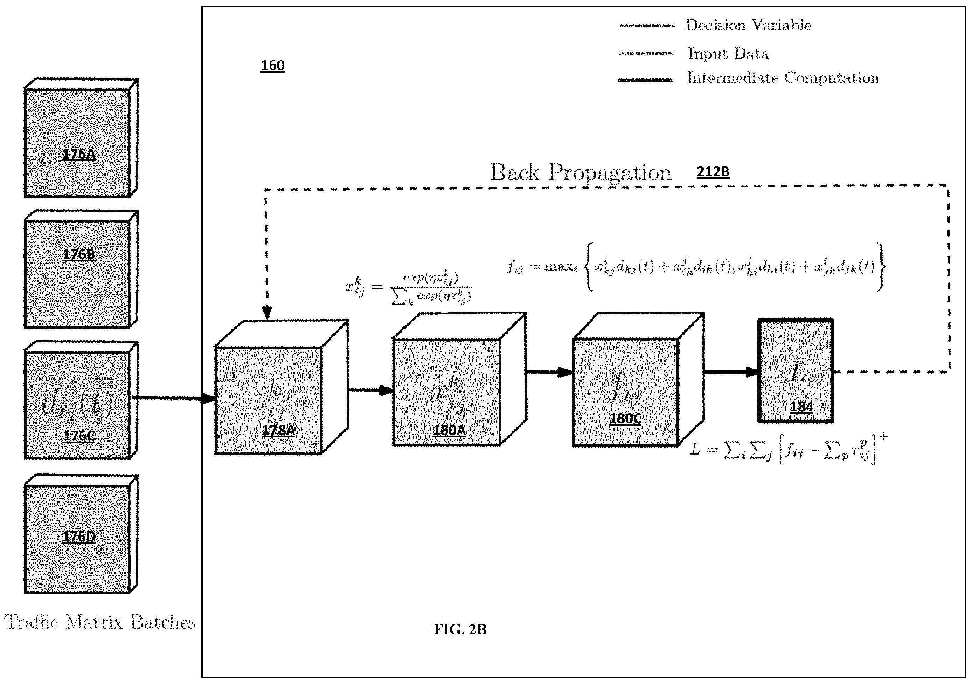

FIG. 2B depicts another example of the machine learning model 160, in accordance with some example embodiments. Unlike the example of FIG. 2A, the ML model 160 of FIG. 2B fixes the optical switch configuration. Once the optical switch configurations are determined, the optical switch configurations can be fixed and the ML model 160 can be re-run to further determine the deflection routing parameters 178A.

To accommodate the learning of the ML model 160 using gradient descent, the constrained optimization may be turned into an unconstrained optimization problem by for example variable redefinition and LaGrange relaxation. Correspondingly, the $x_{ij}^k$ is redefined as an unconstrained variable $z_{ij}^k$ (as shown at 178A) and

$$x_{ij}^k = \frac{exp(\eta z_{ij}^k)}{\sum_k exp(\eta z_{ij}^k)}.$$

This redefinition ensures that for all $i, j,$ and $k$, the variables $x_{ij}^k$ satisfies $x_{ij}^k \geq 0$, and for all $i$ and $j$, $\sum_k x_{ij}^k = 1$. With this transformation, the traffic flow $f_{ij}$ between aggregation block $i$ and aggregation block $j$ is represented as:

$$f_{ij} = \max_t \left\{ \frac{\exp(\eta z_{kj}^i)}{\sum_k \exp(\eta z_{kj}^i)} d_{kj}(t) + \frac{\exp(\eta z_{ik}^j)}{\sum_j \exp(\eta z_{ik}^j)} d_{ik}(t), \right.$$

$$\left. \frac{\exp(\eta z_{ki}^j)}{\sum_k \exp(\eta z_{ki}^j)} d_{ki}(t) + \frac{\exp(\eta z_{jk}^i)}{\sum_j \exp(\eta z_{jk}^i)} d_{jk}(t) \right\}$$

Corresponding to $y_{ij}^p$, an unconstrained variable $\omega_{ij}^p$ (as shown at 178B) is defined so $y_{ij}^p$, is set to

$$y_{ij}^p = \frac{1}{2}\left[\sigma(w_{ij}^p) + \sigma(w_{ji}^p)\right]$$

wherein

$$\sigma(x) = \frac{1}{1+e^{-x}}.$$

This transformation ensures the following two conditions hold:

•

$$0 \le y_{ij}^p \le 1$$

•

$$y_{ij}^p = \dot{y}_{ji}^p \text{ for all } i,j,p.$$

Moreover, the optical switch configuration constraints may be relaxed, and the overall optimization problem may be represented as follows:

$$\min \sum_i \sum_j \left[f_{ij} - \sum_p y_{ij}^p\right]^+ + \lambda \left[nm - \sum_{i,j,p} [y_{ij}^p]^2\right]^+$$
$$+ \theta \sum_{j,p}\left[\sum_i y_{ij}^p - 1\right]^+ + \alpha \sum_{j,p}\left[\sum_j y_{ij}^p - 1\right]^+.$$

Moreover, suitable penalty parameters $\lambda$, $\theta$ and $\alpha$ may be used, so that the constraints are enforced.

*GRADUAL ENFORCEMENT OF INTEGRALITY*

In practice, a penalty function as follows

$$\lambda\left[nm - \sum_{i,j,p} [y_{ij}^p]^2\right]^+$$

may be enforced gradually. If the iterations of the ML model 160 over S iterations and if the current iteration is s, then the constraint is enforced as follows:

$$\lambda\left[\left(\frac{s}{S}\right)nm - \sum_{i,j,p} [y_{ij}^p]^2\right]^+.$$

In other words, initially the integrality constraints are not enforced, but over the iterations the constraints are enforced gradually until the integrality constraints are fully enforced at the end.

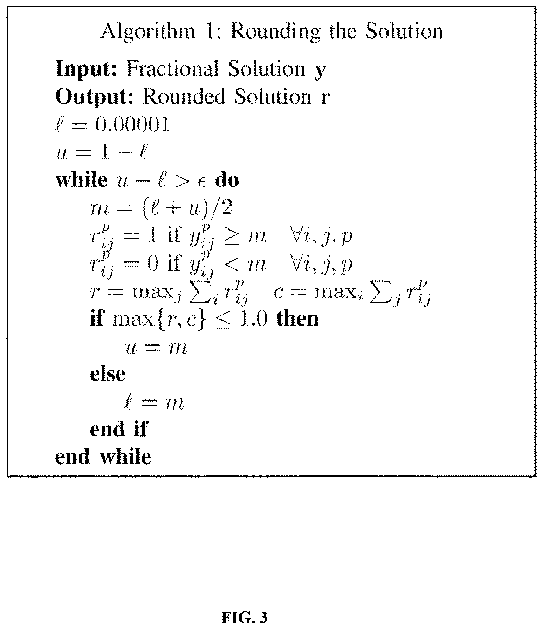

At the end of the learning process (e.g., over a plurality of iterations wherein the gradient descent converges for the ML model 160), the ML model provides the interconnects (e.g., the optical switch configurations) and routing parameters (e.g., deflection routing parameters) that can be used by network management system 150 to configure a network, such as the DIDC 500. In practice however, the interconnect parameters at 178B may be rounded. For example, if the constraints are satisfied, then the $y_{ij}^p$ variables will be binary rather than a fractional value between 0 and 1. To illustrate further, the $y_{ij}^p$ variables indicate whether an optical switch provides an optical path between an incoming line and outgoing line, so as noted above it should have a value of 0 (e.g., no optical path at the optical switch between an incoming line and outgoing line) or 1 (e.g., an optical path exists at the optical switch between an incoming line and outgoing line). As the ML model prefers to operate using continuous values, this can lead to fractional values, so rounding may ensure a binary value for the optical switch configuration values (e.g., $y_{ij}^p$ values). For example, all values of the variable $y_{ij}^p$ above a predefined cutoff value *m* may be set to one and the other $y_{ij}^p$ variables will be set to zero. The objective is to find the smallest cutoff value *m* such that the doubly stochastic constraints at the switch are satisfied. An example of a rounding algorithm for $y_{ij}^p$ is shown at FIG. 3 as Algorithm 1. At the end of Algorithm 1, the variables $r_{ij}^p$ represent the rounded switch interconnect variables, $y_{ij}^p$. Note that the $r_{ij}^p$ variables are binary (e.g., having a value of 0 or 1). The rounding algorithm sets as many of the interconnect variables to one without violating the permutation constraints at the switches. In addition, note that $y_{ij}^p = y_{ji}^p$ by construction, and therefore $r_{ij}^p = r_{ji}^p$ to ensure that the permutation matrix is symmetric after rounding. It is possible to improve the routing by re-solving the routing problem for the fixed interconnect.

In some embodiments, the ML model 160 may, as noted with respect to FIG. 2B, be used again once the outputs 178A-B are determined. For example, the ML model 160 may again learn but the optical switch configurations (e.g., which is determined as the second output 178B of FIG. 2A) is fixed. In other words, the ML model is used to determine the deflection routing parameters 178A with the optical switch configurations as a fixed input. In this way, the ML model 160 may converge to another solution for the deflection routing parameters 178A. Referring again to FIG. 2B, the ML model 160 uses a fixed optical switch configuration at loss function 184 (e.g., as represented by the fixed $r_{ij}^p$ parameter). For example, once the interconnect solution (e.g., optical switch configuration values of $r_{ij}^p$ or $y_{ij}^p$) is rounded using for example Algorithm 1. Since the optical interconnect variables $r_{ij}^p$ are fixed, we can eliminate them from the problem and pose the routing problem as the following:

$$\min \qquad \sum_i \sum_j \left[ f_{ij} - \sum_p r_{ij}^p \right]^+$$

$$\sum_k x_{kj}^i d_{kj}(t) + \sum_k x_{ik}^j d_{ik}(t) \leq f_{ij} \quad \forall i, j, t$$

$$\sum_k x_{ki}^j d_{ki}(t) + \sum_k x_{jk}^i d_{jk}(t) \leq f_{ij} \quad \forall i, j, t$$

$$\sum_k x_{ij}^k = 1 \quad \forall i, j$$

$$x_{ij}^k \geq 0 \quad \forall i, j, k$$

As noted, $r_{ij}^p$ (or $y_{ij}^p$) are fixed by the interconnect configuration (e.g., fixed optical switch configuration values of $r_{ij}^p$ or $y_{ij}^p$.) and are not part of the ML model's optimization, so the only variables to be determined are the $z_{ij}^k$ 178A or $x_{ij}^k$ 180A routing parameters.

In the case of the traffic dependent routing formulation, the routing variable $\Sigma\, x_{ij}^k\,(t)$ represents the fraction of traffic from aggregation block *i* to aggregation block *j* that is routed through intermediate aggregation block node *k* for traffic matrix *t*. The formulation for traffic dependent routing problem is the following:

$$\min \sum_i \sum_j \left[ f_{ij} - \sum_p y_{ij}^p \right]^+$$

$$\sum_k x_{kj}^i(t)d_{kj}(t) + \sum_k x_{ik}^j(t)d_{ik}(t) \le f_{ij} \qquad \forall i,j,t$$

$$\sum_k x_{ki}^j(t)d_{ki}(t) + \sum_k x_{jk}^i(t)d_{jk}(t) \le f_{ij} \qquad \forall i,j,t$$

$$\sum_k x_{ij}^k(t) = 1 \qquad \forall i,j,t$$

$$\sum_i y_{ij}^p = 1 \qquad \forall j,p$$

$$\sum_j y_{ij}^p = 1 \qquad \forall i,p$$

$$y_{ij}^p = y_{ji}^p \qquad \forall i,j,p$$

$$y_{ij}^p \in \{0,1\} \quad \forall i,j,p$$

$$x_{ij}^k(t) \ge 0 \qquad \forall i,j,k,t$$

The solution technique as well as the rounding algorithm are similar to the traffic oblivious routing scheme. A difference between the traffic dependent and traffic oblivious schemes is that in the traffic oblivious scheme the deflections are independent of the traffic matrix and there is one deflection scheme for all traffic patterns and hence the variable $x_{ij}^k$ without a t index. In the case of traffic dependent routing, the routing can depend on the traffic matrix and hence $x_{ij}^k\,(\mathrm{t})$, where t represents the traffic pattern. The traffic dependent formulation has more decision variables since there can be a different deflection pattern for each traffic matrix. Other than this difference, the solution technique is exactly the same as the traffic independent routing.

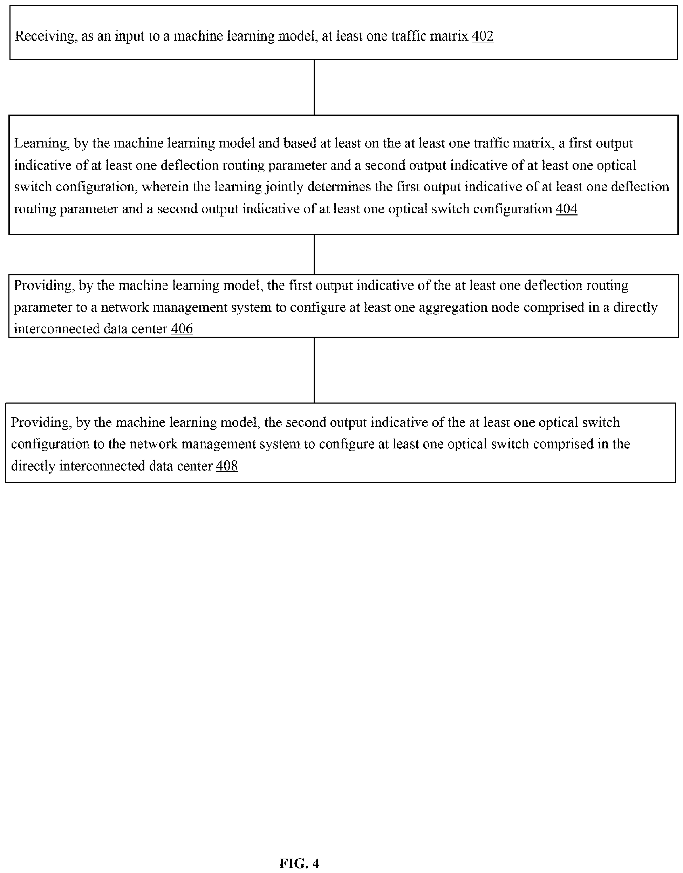

FIG. 4 depicts an example process for determining deflection routing parameters and optical switch configurations, in accordance with some embodiments.

At 402, the process may include receiving, as an input to a machine learning model, at least one traffic matrix, in accordance with some embodiments. For example, the ML model 160 may receive one or more traffic matrixes, such as traffic matrix $d_{ij}(t)$ 176C.

At 404, the process may include learning, by the machine learning model and based at least on the at least one traffic matrix, a first output indicative of at least one deflection routing parameter and a second output indicative of at least one optical switch configuration, wherein the learning jointly determines the first output indicative of at least one deflection routing parameter and a second output indicative of at least one optical switch configuration, in accordance with some embodiments. For example, the ML model 160 may learn (using backpropagation 212A) a first output that indicates a deflection routing parameter, such as $z_{ij}^k$ 178A. The deflection routing parameter $z_{ij}^k$ 178A is an unconstrained representation of $x_{ij}^k$ 180A. Meanwhile, the ML model 160 may learn (using backpropagation 212A) a second output that indicates an optical switch configuration, such as $\omega_{ij}^p$ 178B. The optical switch configuration $\omega_{ij}^p$ 178B is an unconstrained representation of the optical switch configuration value of $y_{ij}^p$ 180B.

At 406, the process may include providing, by the machine learning model, the first output indicative of the at least one deflection routing parameter to a network management system to configure at least one aggregation node comprised in a directly interconnected data center, in accordance with some embodiments. For example, the ML model 160 may provide the first output (which may be in terms of a deflection routing parameter, such as $z_{ij}^k$ 178A or $x_{ij}^k$ 180A) to a network management system 150, which can configure the deflection routing at the aggregation blocks.

At 408, the process may include providing, by the machine learning model, the second output indicative of the at least one optical switch configuration to the network management system to configure at least one optical switch comprised in the directly interconnected data center, in accordance with some embodiments. For example, the ML model 160 may provide the second output (e.g., optical switch configuration, such as $\omega_{ij}^p$ 178B and/or $y_{ij}^p$ 180B) to a network management system 150, which can configure the MEMs mirrors at least one optical switch 110A-1100 (see, also, FIGs. 1B and 1C).

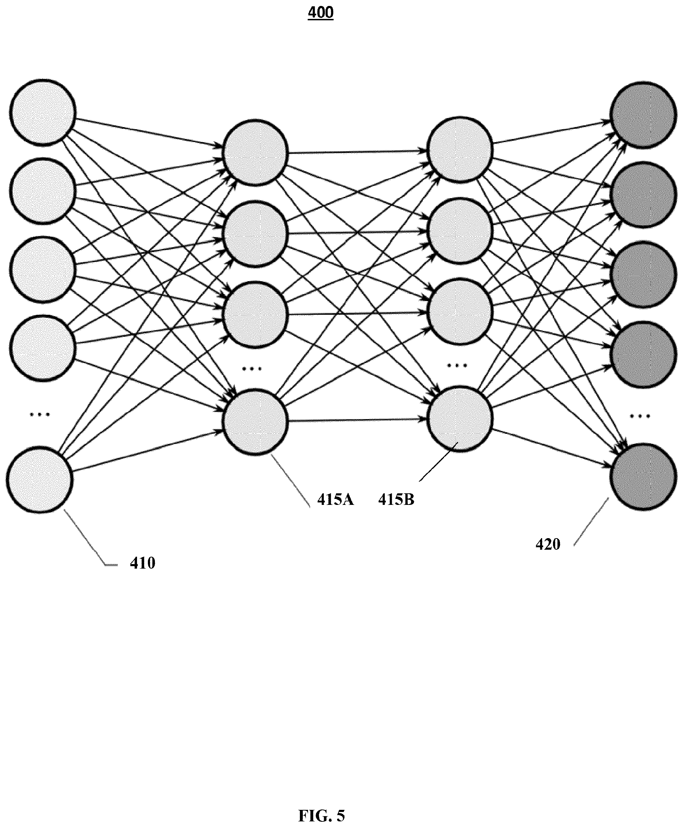

FIG. 5 depicts an example of a machine learning (ML) model 400, in accordance with some embodiments. Specifically, FIG. 5 depicts training of the ML model 400 (which may be the same or similar to ML model 160) to determine deflection routing parameters and optical switch configurations. In the example of FIG. 5, the ML model 400 may be used as the ML model 160. The input layer 410 may include a node for each node in the network. The ML model may include one or more hidden layers 415A-B (also referred to as intermediate layers) and an output layer 420. The machine learning model 400 may be comprised in a network node, a user equipment, and/or other computer-based system. Alternatively, or additionally, the ML model may be provided as a service, such as a cloud service (accessible at a computing system such as a server via a network such as the Internet or other type of network).

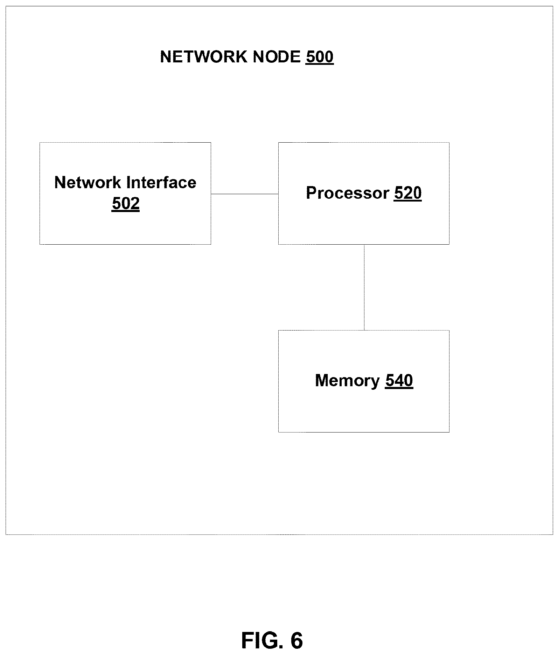

FIG. 6 depicts a block diagram of a network node 500, in accordance with some embodiments. As noted, the machine learning model 400 or 160 (and/or the network management system 150) may be comprised in a network node. The network node 500 may comprise or be comprised in one or more network side nodes or functions. The network node 500 may include a network interface 502, a processor 520, and a memory 504, in accordance with some embodiments. The network interface 502 may include wired and/or wireless transceivers to enable access other nodes including base stations, other network nodes, the Internet, other networks, and/or other nodes. The memory 504 may comprise volatile and/or non-volatile memory including program code, which when executed by at least one processor 520 provides, among other things, the processes disclosed herein. For example, the network management system 150 and/or ML model 160 may be comprised in a network node.

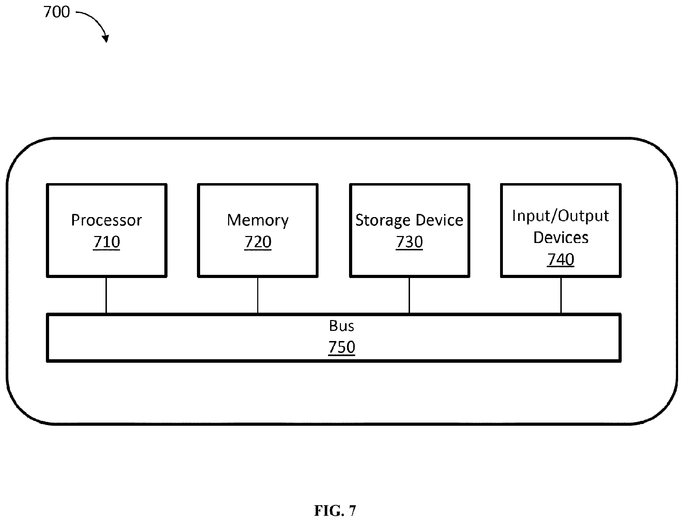

FIG. 7 depicts a block diagram illustrating a computing system 700, in accordance with some embodiments. For example, the network management system 150 and/or ML model 160 (or 400) may be comprised the system 700. As shown in FIG. 7, the computing system 700 can include a processor 710, a memory 720, a storage device 730, and input/output devices 740. The processor 710, the memory 720, the storage device 730, and the input/output devices 740 can be interconnected via a system bus 750. The processor 710 is capable of processing instructions for execution within the computing system 700. In some implementations of the current subject matter, the processor 710 can be a single-threaded processor. Alternately, the processor 710 can be a multi-threaded processor. The process may be a multi-core processor have a plurality or processors or a single core processor. Alternatively, or additionally, the processor 710 can be a graphics processor unit (GPU), an AI chip, and/or the like. The processor 710 is capable of processing instructions stored in the memory 720 and/or on the storage device 730 to display graphical information for a user interface provided via the input/output device 740. The memory 720 is a computer readable medium such as volatile or non-volatile that stores information within the computing system 700. The memory 720 can store data structures representing configuration object databases, for example. The storage device 730 is capable of providing persistent storage for the computing system 700. The storage device 730 can be a floppy disk device, a hard disk device, an optical disk device, or a tape device, or other suitable persistent storage means. The input/output device 740 provides input/output operations for the computing system 700. In some implementations of the current subject matter, the input/output device 740 includes a keyboard and/or pointing device. In various implementations, the input/output device 740 includes a display unit for displaying graphical user interfaces. According to some implementations of the current subject matter, the input/output device 740 can provide input/output operations for a network device. For example, the input/output device 740 can include Ethernet ports or other networking ports to communicate with one or more wired and/or wireless networks (e.g., a local area network (LAN), a wide area network (WAN), the Internet).

Without in any way limiting the scope, interpretation, or application of the claims appearing below, a technical effect of one or more of the example embodiments disclosed herein may include enhanced network operation with decreased latency, enhanced scalability, and/or reduced complexity of network management.

The subject matter described herein may be embodied in systems, apparatus, methods, and/or articles depending on the desired configuration. For example, the base stations and user equipment (or one or more components therein) and/or the processes described herein can be implemented using one or more of the following: a processor executing program code, an application-specific integrated circuit (ASIC), a digital signal processor (DSP), an embedded processor, a field programmable gate array (FPGA), and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. These computer programs (also known as programs, software, software applications, applications, components, program code, or code) include machine instructions for a programmable processor, and may be implemented in a high-level procedural and/or objectoriented programming language, and/or in assembly/machine language. As used herein, the term "computer-readable medium" refers to any computer program product, machine-readable medium, computer-readable storage medium, apparatus and/or device (for example, magnetic discs, optical disks, memory, Programmable Logic Devices (PLDs)) used to provide machine instructions and/or data to a programmable processor, including a machine-readable medium that receives machine instructions. Similarly, systems are also described herein that may include a processor and a memory coupled to the processor. The memory may include one or more programs that cause the processor to perform one or more of the operations described herein.

Although a few variations have been described in detail above, other modifications or additions are possible. In particular, further features and/or variations may be provided in addition to those set forth herein. Moreover, the implementations described above may be directed to various combinations and subcombinations of the disclosed features and/or combinations and subcombinations of several further features disclosed above. Other embodiments may be within the scope of the following claims.

If desired, the different functions discussed herein may be performed in a different order and/or concurrently with each other. Furthermore, if desired, one or more of the above-described functions may be optional or may be combined. Although various aspects of some of the embodiments are set out in the independent claims, other aspects of some of the embodiments comprise other combinations of features from the described embodiments and/or the dependent claims with the features of the independent claims, and not solely the combinations explicitly set out in the claims. It is also noted herein that while the above describes example embodiments, these descriptions should not be viewed in a limiting sense. Rather, there are several variations and modifications that may be made without departing from the scope of some of the embodiments as defined in the appended claims. Other embodiments may be within the scope of the following claims. The term "based on" includes "based on at least." The use of the phase "such as" means "such as for example" unless otherwise indicated.

**Claims**

1. A method comprising:

    receiving, as an input to a machine learning model, at least one traffic matrix;
    learning, by the machine learning model and based at least on the at least one traffic matrix, a first output indicative of at least one deflection routing parameter and a second output indicative of at least one optical switch configuration, wherein the learning jointly determines the first output indicative of at least one deflection routing parameter and the second output indicative of at least one optical switch configuration;
    providing, by the machine learning model, the first output indicative of the at least one deflection routing parameter to a network management system to configure at least one aggregation node comprised in a directly interconnected data center; and
    providing, by the machine learning model, the second output indicative of the at least one optical switch configuration to the network management system to configure at least one optical switch comprised in the directly interconnected data center.

2. The method of claim 1, wherein the machine learning model comprises a neural network, and wherein the learning is based at least on backpropagation to learn the first output indicative of the at least one deflection routing parameter and the second output indicative of the at least one optical switch configuration.

3. The method of claim 1, wherein the at least one traffic matrix indicates at least an amount of traffic flow between a first aggregation node and a second aggregation node.

4. The method of claim 1, wherein the at least one aggregation node comprises a first aggregation node, a second aggregation node, and an intermediate aggregation node, wherein the first aggregation node, the second aggregation node, and the intermediate aggregation node are optically coupled via the at least one optical switch, wherein the at least one deflection routing parameter indicates a fractional amount of traffic that is to be carried between the first aggregation node and the second aggregation node via the intermediate aggregation node.

5. The method of claim 1, wherein the at least one optical switch configuration provides at least a first configuration of a first MEMS-based mirror comprised in a first optical switch, wherein the first MEMS-based mirror provides an optical path between an a first optical line and a second optical line that are incident on the first optical switch, wherein the first optical line is further coupled to a first aggregation node, and wherein the second optical line is further coupled to a second aggregation node.

6. The method of claim 1 further comprising:
rounding one or more values of the at least one optical switch configuration to provide a binary value that indicate whether an optical switch provides or does not provide an optical path between an incoming optical line and an outgoing optical line.

7. The method of claim 1 further comprising:

learning, by the machine learning model and based at least one the at least one traffic matrix and the at least one optical switch configuration which is fixed during the learning, an updated first output indicative of at least one updated deflection routing parameter; and
providing the updated first output to the network management system to configure the at least one aggregation node comprised in the directly interconnected data center.

8. The method of claim 1, wherein the learning of the first output and the second output minimizes an objective function.

9. The method of claim 1, wherein the machine learning model comprises a neural network that includes a first layer to receive inputs including the input, at least one intermediate layer, and an output layer.

10. A system comprising:

at least one processor; and
at least one memory including program code which when executed by the at least one processor causes operations comprising:

receiving, as an input to a machine learning model, at least one traffic matrix;
learning, by the machine learning model and based at least on the at least one traffic matrix, a first output indicative of at least one deflection routing parameter and a second output indicative of at least one optical switch configuration, wherein the learning jointly determines the first output indicative of at least one deflection routing parameter and the second output indicative of at least one optical switch configuration;
providing, by the machine learning model, the first output indicative of the at least one deflection routing parameter to a network management system to configure at least one aggregation node comprised in a directly interconnected data center; and
providing, by the machine learning model, the second output indicative of the at least one optical switch configuration to the network management system to configure at least one optical switch comprised in the directly interconnected data center.

11. The system of claim 10, wherein the machine learning model comprises a neural network, and wherein the learning is based at least on backpropagation to learn the first output indicative of the at least one deflection routing parameter and the second output indicative of the at least one optical switch configuration.

12. The system of claim 10, wherein the at least one traffic matrix indicates at least an amount of traffic flow between a first aggregation node and a second aggregation node.

13. The system of claim 10, wherein the at least one aggregation node comprises a first aggregation node, a second aggregation node, and an intermediate aggregation node, wherein the first aggregation node, the second aggregation node, and the intermediate aggregation node are optically coupled via the at least one optical switch, wherein the at least one deflection routing parameter indicates a fractional amount of traffic that is to be carried between the first aggregation node and the second aggregation node via the intermediate aggregation node.

14. The system of claim 10, wherein the at least one optical switch configuration provides at least a first configuration of a first MEMS-based mirror comprised in a first optical switch, wherein the first MEMS-based mirror provides an optical path between an a first optical line and a second optical line that are incident on the first optical switch, wherein the first optical line is further coupled to a first aggregation node, and wherein the second optical line is further coupled to a second aggregation node.

15. The system of claim 10 further comprising:
rounding one or more values of the at least one optical switch configuration to provide a binary value that indicate whether an optical switch provides or does not provide an optical path between an incoming optical line and an outgoing optical line.

16. The system of claim 10 further comprising:

learning, by the machine learning model and based at least one the at least one traffic matrix and the at least one optical switch configuration which is fixed during the learning, an updated first output indicative of at least one updated deflection routing parameter; and
providing the updated first output to the network management system to configure the at least one aggregation node comprised in the directly interconnected data center.

17. The system of claim 10, wherein the learning of the first output and the second output minimizes an objective function.

18. The system of claim 10, wherein the machine learning model comprises a neural network that includes a first layer to receive inputs including the input, at least one intermediate layer, and an output layer.

19. A non-transitory computer-readable storage comprising program code which when executed by at least one processor causes operations comprising:

receiving, as an input to a machine learning model, at least one traffic matrix;
learning, by the machine learning model and based at least on the at least one traffic matrix, a first output indicative of at least one deflection routing parameter and a second output indicative of at least one optical switch configuration, wherein the learning jointly determines the first output indicative of at least one deflection routing parameter and the second output indicative of at least one optical switch configuration;
providing, by the machine learning model, the first output indicative of the at least one deflection routing parameter to a network management system to configure at least one aggregation node comprised in a directly interconnected data center; and
providing, by the machine learning model, the second output indicative of the at least one optical switch configuration to the network management system to configure at least one optical switch comprised in the directly interconnected data center.

EP 4 708 900 A1

Network Management System 150

ML Model 160

Output:
- at least one deflection
routing parameter
-at least one optical
switch configuration

156

Input:
Traffic
Matrixes

152

Direct Interconnect
Layer

Aggregation
Blocks

Racks

500

FIG. 1A

16

500

Direct Interconnect
Layer
110B                                                                                 110O

106

110A

112A

112B
112C

104A
                                                                    104B
                                              112N                         104C              104D
Aggregation
Blocks              i                    k                  j

Racks

102A              102B              102C              102D

**FIG. 1B**

186 Symmetric permutation matrix

$$\begin{bmatrix} 0 & 0 & 0 & 0 & 0 & 0 & 1 & 0 & 0 & 0 \\ 0 & 0 & 0 & 0 & 0 & 0 & 0 & 0 & 1 & 0 \\ 0 & 0 & 0 & 0 & 0 & 0 & 0 & 0 & 0 & 1 \\ 0 & 0 & 0 & 0 & 0 & 0 & 0 & 1 & 0 & 0 \\ 0 & 0 & 0 & 0 & 0 & 1 & 0 & 0 & 0 & 0 \\ 0 & 0 & 0 & 0 & 1 & 0 & 0 & 0 & 0 & 0 \\ 1 & 0 & 0 & 0 & 0 & 0 & 0 & 0 & 0 & 0 \\ 0 & 0 & 0 & 1 & 0 & 0 & 0 & 0 & 0 & 0 \\ 0 & 1 & 0 & 0 & 0 & 0 & 0 & 0 & 0 & 0 \\ 0 & 0 & 1 & 0 & 0 & 0 & 0 & 0 & 0 & 0 \end{bmatrix}$$

**FIG. 1C**

**FIG. 1D**

Traffic from $k$ to $j$ is deflected through $i$

Traffic from $i$ to $k$ is deflected through $j$

**FIG. 1E**

Decision Variable
Input Data
Intermediate Computation

Back Propagation **212B**

Back Propagation **212A**

160

$x_{ij}^k = \frac{exp(\eta z_{ij}^k)}{\sum_k exp(\eta z_{ij}^k)}$

$f_{ij} = \max_t \left\{ x_{kj}^i d_{kj}(t) + x_{ik}^j d_{ik}(t), x_{ki}^j d_{ki}(t) + x_{jk}^i d_{jk}(t) \right\}$

$L = \sum_i \sum_j \left[ f_{ij} - \sum_p y_{ij}^p \right]^+$

$P_1 = \lambda \left[ \left( \frac{s}{S} \right) nm - \sum_{i,j,p} [y_{ij}^p]^2 \right]^+$

$P_2 = \theta \sum_{j,p} \left[ \sum_i y_{ij}^p - 1 \right]^+$

$P_3 = \theta \sum_{i,p} \left[ \sum_j y_{ij}^p - 1 \right]^+$

$y_{ij}^p = \frac{1}{1 + e^{-w_{ij}^p}}$

$z_{ij}^k$ **178A**

$w_{ij}^p$ **178B**

$x_{ij}^k$ **180A**

$y_{ij}^p$ **180B**

$f_{ij}$ **180C**

$L$ **184**

$P_1$ **180D**

$P_2$ **180E**

$P_3$ **180F**

$d_{ij}(t)$ **176C**

**176A** **176B** **176D**

Traffic Matrix Batches

**FIG. 2A**

21

**FIG. 2B**

Legend:
— Decision Variable
— Input Data
— Intermediate Computation

Back Propagation 212B

160

$$x_{ij}^k = \frac{exp(\eta z_{ij}^k)}{\sum_k exp(\eta z_{ij}^k)}$$

$$f_{ij} = \max_t \left\{ x_{kj}^i d_{kj}(t) + x_{ik}^i d_{ik}(t) + x_{ki}^j d_{ki}(t) + x_{jk}^j d_{jk}(t) \right\}$$

$$L = \sum_i \sum_j \left[ f_{ij} - \sum_p r_{ij}^p \right]^+$$

$z_{ij}^k$ 178A

$x_{ij}^k$ 180A

$f_{ij}$ 180C

$L$ 184

176A 176B $d_{ij}(t)$ 176C 176D

Traffic Matrix Batches

## Algorithm 1: Rounding the Solution

**Input:** Fractional Solution **y**
**Output:** Rounded Solution **r**
$\ell = 0.00001$
$u = 1 - \ell$
**while** $u - \ell > \epsilon$ **do**
 $m = (\ell + u)/2$
 $r_{ij}^{p} = 1$ if $y_{ij}^{p} \geq m \quad \forall i, j, p$
 $r_{ij}^{p} = 0$ if $y_{ij}^{p} < m \quad \forall i, j, p$
 $r = \max_{j} \sum_{i} r_{ij}^{p} \quad c = \max_{i} \sum_{j} r_{ij}^{p}$
 **if** $\max\{r, c\} \leq 1.0$ **then**
  $u = m$
 **else**
  $\ell = m$
 **end if**
**end while**

**FIG. 3**

Receiving, as an input to a machine learning model, at least one traffic matrix 402

Learning, by the machine learning model and based at least on the at least one traffic matrix, a first output indicative of at least one deflection routing parameter and a second output indicative of at least one optical switch configuration, wherein the learning jointly determines the first output indicative of at least one deflection routing parameter and a second output indicative of at least one optical switch configuration 404

Providing, by the machine learning model, the first output indicative of the at least one deflection routing parameter to a network management system to configure at least one aggregation node comprised in a directly interconnected data center 406

Providing, by the machine learning model, the second output indicative of the at least one optical switch configuration to the network management system to configure at least one optical switch comprised in the directly interconnected data center 408

**FIG. 4**

<u>400</u>

**FIG. 5**

NETWORK NODE 500

Network Interface 502

Processor 520

Memory 540

FIG. 6

700

Processor
710

Memory
720

Storage Device
730

Input/Output
Devices
740

Bus
750

FIG. 7

Europäisches
Patentamt

European
Patent Office

Office européen
des brevets

# EUROPEAN SEARCH REPORT

**Application Number**

EP 25 19 1482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AMIN RASHID ET AL: "A Survey on Machine Learning Techniques for Routing Optimization in SDN", IEEE ACCESS, IEEE, USA, vol. 9, 26 July 2021 (2021-07-26), pages 104582-104611, XP011868198, DOI: 10.1109/ACCESS.2021.3099092 [retrieved on 2021-07-29] * Section V * * figure 3 * | 1-19 | INV. H04Q11/00 H04L41/16 |
| X | YUANYUAN ET AL: "Neural network-assisted decision-making for adaptive routing strategy in optical datacenter networks - ScienceDirect", OPTICAL SWITCHING AND NETWORKING, [Online] vol. 45, 1 September 2022 (2022-09-01), page 100677, XP093352185, NL ISSN: 1573-4277, DOI: 10.1016/j.osn.2022.100677 Retrieved from the Internet: URL:https://www.sciencedirect.com/science/article/pii/S1573427722000133?> [retrieved on 2026-01-12] * page 2, paragraph 4 * * Section 2.1 * * Section Conclusion * | 1-19 | |
| A | BALANICI MIHAIL ET AL: "Machine Learning-Based Traffic Prediction for Optical Switching Resource Allocation in Hybrid Intra-Data Center Networks", 2019 OPTICAL FIBER COMMUNICATIONS CONFERENCE AND EXHIBITION (OFC), OSA, 3 March 2019 (2019-03-03), pages 1-3, XP033540159, [retrieved on 2019-04-22] * Section II * | 1-19 | TECHNICAL FIELDS SEARCHED (IPC) H04Q H04L |

The present search report has been drawn up for all claims

| Place of search | Date of completion of the search | Examiner |
|---|---|---|
| Munich | 19 January 2026 | Inan, Beril |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)